(19) **Europäisches Patentamt**
**European Patent Office**
**Office européen des brevets**

(11)  **EP 3 828 660 B1**

(12)  # FASCICULE DE BREVET EUROPEEN

(45)  Date de publication et mention
de la délivrance du brevet:
**06.09.2023   Bulletin 2023/36**

(21)  Numéro de dépôt: **20210354.5**

(22)  Date de dépôt: **27.11.2020**

(51)  Classification Internationale des Brevets (IPC):
**G05D 1/02** *(2020.01)*       **G08G 1/133** *(2006.01)*
**B61L 3/00** *(2006.01)*       **G08G 1/137** *(2006.01)*
**G01C 21/34** *(2006.01)*       *G08G 1/0962* *(2006.01)*

(52)  Classification Coopérative des Brevets (CPC):
**G05D 1/0223; B61L 3/008; B61L 27/14;**
**B61L 27/16; G08G 1/137;** G01C 21/343;
G05D 2201/0213; G08G 1/0962

(54)  **PROCÉDÉ D'AIDE À LA CONDUITE D'UN VÉHICULE DE TRANSPORT PUBLIC**

FAHRERASSISTENZVERFAHREN EINES FAHRZEUGS DES ÖFFENTLICHEN VERKEHRS

METHOD FOR ASSISTANCE IN DRIVING A PASSENGER TRANSPORT VEHICLE

(84)  Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30)  Priorité: **29.11.2019   FR 1913540**

(43)  Date de publication de la demande:
**02.06.2021   Bulletin 2021/22**

(73)  Titulaire: **ALSTOM Transport Technologies
93400 Saint-Ouen (FR)**

(72)  Inventeurs:
• **BAVARD, Jean
64140 LONS (FR)**
• **BONY, Sylvain
95880 ENGHIEN LES BAINS (FR)**
• **HIBON, Samuel
72000 LE MANS (FR)**
• **VERSTRAET, Olivier
75013 PARIS (FR)**

(74)  Mandataire: **Lavoix
2, place d'Estienne d'Orves
75441 Paris Cedex 09 (FR)**

(56)  Documents cités:
**WO-A1-2012/119197       WO-A2-2008/152287
DE-A1-102010 024 800       DE-A1-102011 013 010**

**Description**

La présente invention concerne un procédé d'aide à la conduite d'un véhicule de transport public.

Les véhicules de transport public connus effectuent des missions entre un point de départ et une destination, pour une durée déterminée ou des horaires de mission. Les horaires de mission doivent être respectés pour satisfaire les voyageurs, et pour optimiser la planification des missions de divers véhicules sur un même trajet par exemple.

A cette fin, un profil de mission est déterminé associant à une pluralité de positions du véhicule, l'horaire et/ou une vitesse instantanée du véhicule.

Si, à un instant donné au cours de la mission, les horaires de mission ne sont pas respectés, un nouveau profil de mission est calculé pour l'adapter aux horaires de mission. Cependant, un tel procédé ne donne pas entière satisfaction. En effet, le calcul d'un nouveau profil de mission prend en compte de nombreux paramètres et nécessite des calculs lourds et complexes.

Des exemples de procédés d'aide à la conduite sont décrits dans WO 2012/119197, WO 2008/152287, DE 10 2011 013010 ou DE 10 2010 024800.

Par ailleurs, pour répondre à des problématiques environnementales et économiques, il est important d'améliorer l'efficience énergétique des véhicules de transport public en gérant au mieux leur consommation énergétique.

L'invention a notamment pour but de remédier aux inconvénients précités en fournissant un procédé d'aide à la conduite permettant d'adapter des paramètres de conduite du véhicule de façon dynamique pour respecter les horaires de mission du véhicule tout en favorisant l'efficience énergétique du véhicule.

A cet effet, l'invention a pour objet un procédé d'aide à la conduite selon la revendication 1..

Un procédé selon l'invention peut comporter en outre l'une ou plusieurs des caractéristiques suivantes, prises seules ou selon toutes combinaisons techniquement envisageables :

- les paramètres de conduite comprennent au moins un paramètre choisi parmi une vitesse instantanée, une position d'une manette de conduite et un effort de traction du véhicule ;
- l'étape de détermination de nouveaux paramètres de conduite comprend une étape de détermination d'une vitesse cible à atteindre dans un délai prédéterminé pour suivre le nouveau profil de mission, une étape de détermination d'une vitesse instantanée du véhicule, et une étape d'indication d'instructions de conduite à destination d'un conducteur du véhicule de transport public, lesdites instructions de conduite comportant des instructions de modification de la vitesse instantanée en vue de l'approcher de la vitesse cible ;

- l'étape de détermination de nouveaux paramètres de conduite comprend une étape de détermination d'une vitesse cible à atteindre dans un délai prédéterminé pour suivre le nouveau profil de mission, une étape de détermination d'une vitesse instantanée du véhicule, et une étape de modification automatique de la vitesse instantanée en vue de l'approcher de la vitesse cible ;
- à l'étape de détermination de nouveaux paramètres de conduite c2), la vitesse cible est calculée comme suit : si

$$W1 * S2 + W2 * S1 \neq 0$$
,

$$TS = ((S2 * S1))/((W1 * S2 + W2 * S1))$$

où TS est le profil de vitesse cible à atteindre dans un délai prédéterminé,
W1 est la première pondération,
W2 est la deuxième pondération,
S1 est le profil de vitesse à la position instantanée pour le profil encadrant inférieur, et
S2 est le profil de vitesse à la position instantanée pour le profil encadrant supérieur,
et dans les cas où

$$W1 * S2 + W2 * S1 = 0$$
,

la vitesse cible est égale à 0 ;

- le véhicule comprend un dispositif de guidage par satellite pour déterminer la position instantanée du véhicule et la durée restante souhaitée ;

- lorsque le véhicule effectue au moins un trajet entre un premier point de départ et une première destination, puis un trajet entre cette première destination devenant un deuxième point de départ, et une deuxième destination, ledit véhicule effectue deux missions distinctes ;
- les points de départ et de destination de chaque mission sont des points d'arrêt ou de passage sur le trajet.

La présente invention a également pour objet un dispositif d'aide à la conduite d'un véhicule de transport public, le dispositif comprenant des moyens de mise en oeuvre d'un procédé d'aide à la conduite selon l'invention.

La présente invention a également pour objet un véhicule de transport public comprenant un tel dispositif d'aide à la conduite.

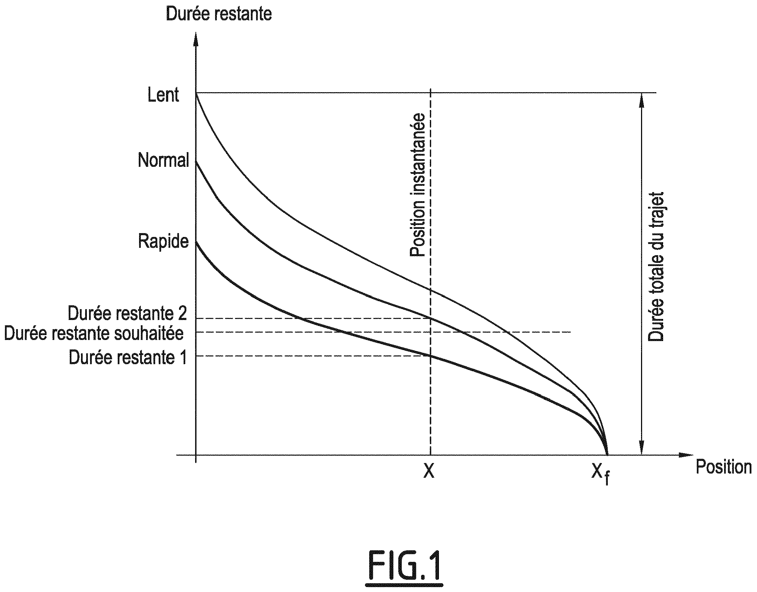

L'invention sera mieux comprise à la lecture de la description qui va suivre, donnée uniquement à titre d'exemple et faite en se référant à la figure annexée [Fig.1],

sur laquelle est représenté un ensemble de courbes de profils de mission pour un véhicule de transport public sur un trajet donné, chaque profil étant formé par une courbe de durée restante pour atteindre la destination en fonction d'une position du véhicule sur le trajet.

Un véhicule de transport public selon l'invention est par exemple un véhicule ferroviaire, un tramway, un autobus, ou tout autre véhicule terrestre de transport public.

Une mission du véhicule de transport public est définie par un trajet comprenant un point de départ du véhicule et une destination, et une durée de trajet entre le point de départ et la destination du véhicule sur ce trajet.

Dans la présente description, il est entendu qu'un véhicule effectuant un trajet entre un premier point de départ et une première destination, puis un trajet entre cette première destination devenant un deuxième point de départ et une deuxième destination, effectue deux missions distinctes et non une seule mission.

Par exemple, la mission comprend en outre un instant de départ du véhicule du point de départ et un instant souhaité d'arrivée à la destination, en fonction d'un horaire prédéterminé.

Un procédé d'aide à la conduite selon l'invention comprend une étape préalable de détermination et d'enregistrement d'une pluralité de profils de mission du véhicule.

Pour un trajet donné, et pour une arrivée à destination à un instant donné, une pluralité de profils de mission est déterminée, comme cela est représenté sur la Figure 1.

Un profil de mission est formé par une courbe de durée restante pour atteindre la destination en fonction d'une position du véhicule sur le trajet et selon des paramètres de conduite donnés spécifiques à ce profil de mission.

De préférence, les profils de mission sont distincts au point de départ pour une position initiale du véhicule où la durée restante est égale à une durée totale du trajet, mais ces profils convergent vers un unique point étant une position finale du véhicule sur le trajet.

En d'autres termes, l'instant de départ du véhicule diffère en fonction du profil de mission, mais l'instant d'arrivée est identique pour l'ensemble des profils de mission.

En variante, les profils convergent vers un unique point étant un point de passage sans arrêt du véhicule.

Les paramètres de conduite comprennent, par exemple, une vitesse instantanée du véhicule, une position d'une manette de conduite, et/ou un effort de traction correspondant.

La position de la manette de conduite est typiquement comprise entre -1 pour une force de freinage maximale et 1 pour une force de traction maximale. 0 est une position neutre.

Un enregistrement d'un profil de mission comprend par exemple une pluralité de positions du véhicule, et pour chaque position une durée restante, une vitesse instantanée du véhicule, une position d'une manette de conduite et/ou un effort de traction correspondant.

De préférence, les profils déterminés sont les profils minimisant l'énergie consommée par le véhicule pour les paramètres de conduite donnés.

De cette façon, le profil de vitesse proposé par le dispositif est efficient en énergie.

Ainsi, pour une vitesse moins élevée du véhicule, la courbe du profil de mission se situe au-dessus de la courbe d'un profil de mission pour une vitesse plus élevée. En effet, pour une position donnée, plus le véhicule est lent et plus la durée restante pour atteindre la destination est élevée.

Typiquement, deux à cinq profils de mission sont pré-chargés et enregistrés pour chaque trajet. On peut augmenter ce nombre de profils de mission.

Sur l'exemple de la Figure 1, le profil « rapide » est le profil dont la durée pour effectuer le trajet est minimale. Le profil « normal » est déterminé pour une durée commerciale définie. Le profil « lent » est le profil dont la durée pour effectuer le trajet est maximale, correspondant à la durée du profil normal additionnée d'une marge donnée. Par exemple, la marge donnée est de 10 %.

Sur la Figure 1, le profil « rapide » est le plus bas, le profil « lent » est le plus haut, et le profil « normal » se trouve entre le profil « rapide » et le profil « lent ».

De préférence, l'étape de détermination et d'enregistrement d'une pluralité de profils de mission du véhicule est effectuée en dehors d'une mission du véhicule, par exemple avant une mission ou entre deux missions.

Ainsi, il n'est pas nécessaire de disposer de moyens de calcul de profils de mission à bord du véhicule.

Par exemple, les profils de mission sont pré-chargés et enregistrés dans un système de contrôle et de surveillance du véhicule (« Train Control Monitoring System » en anglais, abrégé TCMS) à bord du véhicule.

Ainsi, un support d'affichage supplémentaire tel qu'un appareil électronique mobile n'est pas nécessaire. La présence d'un tel support d'affichage est toutefois possible.

Le procédé comprend ensuite, à au moins un premier instant au cours du trajet une étape de détermination d'une position instantanée du véhicule et d'une durée restante souhaitée pour atteindre la destination.

La position instantanée du véhicule est par exemple déterminée par un dispositif de guidage par satellite.

Par exemple, le dispositif de guidage par satellite est un système de localisation GPS (« Global Position System » en anglais) installé à bord du véhicule. Le système GPS indique une position absolue du véhicule dont les coordonnées sont une latitude et une longitude. La position absolue du véhicule est convertie en distance entre le point de départ et la position instantanée du véhicule. La position absolue du véhicule est également convertie en distance entre la position instantanée du véhicule et la destination, appelée distance restant à parcourir.

La conversion est par exemple effectuée par un premier dispositif de calcul à bord.

Au point de départ, la durée restante souhaitée est égale à la durée totale du trajet ou de la portion de trajet.

A destination, la durée restante souhaitée est égale à 0.

La durée restante souhaitée au premier instant est obtenue par le rapport entre la distance restant à parcourir et la vitesse instantanée du véhicule.

Par exemple, la durée restante souhaitée est déterminée par un deuxième dispositif de calcul à bord. La durée restante souhaitée est par exemple déterminée en fonction d'un horaire prédéfini que l'on souhaite respecter. En variante, la durée restante souhaitée est déterminée par le système GPS.

A la position instantanée, le ou les profils de mission dont les courbes sont les plus proches de la durée restante souhaitée à la position instantanée du véhicule sont identifiés parmi les profils de mission préalablement déterminés et pré-chargés.

Par exemple, le ou les profils de mission les plus proches sont identifiés par un dispositif de comparaison propre à comparer la durée restante souhaitée à la position instantanée avec la durée restante de chacun des profils de mission, et à identifier le ou les profils les plus proches.

Trois cas sont à distinguer.

Dans un premier cas où la durée restante souhaitée est inférieure à la durée restante la plus basse parmi tous les profils, de nouveaux paramètres de conduite sont déterminés pour suivre un nouveau profil de mission.

Le nouveau profil de mission est le profil dont la durée restante est la plus basse parmi tous les profils de mission déterminés.

Dans l'exemple de la Figure 1, il s'agit du profil « rapide ».

Les paramètres de conduite enregistrés pour le profil dont la durée restante est la plus basse parmi tous les profils de mission déterminés, sont de préférence appliqués automatiquement.

Dans un deuxième cas où la durée restante souhaitée est supérieure à la durée restante la plus haute parmi tous les profils mais en-deçà d'une valeur prédéterminée, de nouveaux paramètres de conduite sont déterminés pour suivre un nouveau profil de mission.

Le nouveau profil de mission est le profil dont la durée restante est la plus haute parmi tous les profils de mission déterminés.

Dans l'exemple de la **[Fig. 1]**

Figure 1, il s'agit du profil « lent ».

Les paramètres de conduite enregistrés pour le profil dont la durée restante est la plus haute parmi tous les profils de mission déterminés, sont de préférence appliqués automatiquement.

Lorsque la durée restante est au-delà de la valeur prédéterminée, c'est-à-dire si le retard pris par le véhicule est tel que même le profil le plus rapide ne permet pas d'arriver à l'heure à la destination, le nouveau profil de mission est le profil « rapide » tant que le retard n'est pas rattrapé.

Dans un troisième cas, où la durée restante souhaitée se trouve entre les durées restantes de deux profils comportant un profil encadrant supérieur dont la durée restante à la position instantanée est immédiatement supérieure à la durée restante souhaitée et un profil encadrant inférieur dont la durée restante à la position instantanée est immédiatement inférieure à la durée restante souhaitée, le procédé comprend une étape c1) de calcul de pondérations à partir de la durée restante souhaitée à la position instantanée et de la durée restante à ladite position instantanée pour chaque profil de mission encadrant.

Les pondérations comprennent une première pondération et une deuxième pondération et sont calculées comme suit :

$$W1 = \frac{(RT2-RT)}{(RT2-RT1)}$$

et

$$W2 = \frac{(RT-RT1)}{(RT2-RT1)},$$

où W1 est la première pondération destinée à être appliquée au profil inférieur,

W2 est la deuxième pondération, destinée à être appliquée au profil supérieur,

RT est la durée restante souhaitée à la position instantanée,

RT1 est la durée restante à la position instantanée pour le profil encadrant inférieur, et

RT2 est la durée restante à la position instantanée pour le profil encadrant supérieur.

Les pondérations sont par exemple calculées à l'aide d'un troisième dispositif de calcul à bord.

Les pondérations permettent le calcul de nouveaux paramètres de conduite à appliquer.

Le procédé comprend, à la suite de l'étape c1), une étape c2) de détermination de nouveaux paramètres de conduite pour suivre un nouveau profil de mission, le nouveau profil de mission étant un profil intermédiaire pondéré entre les profils de mission encadrants en fonction des résultats obtenus à l'étape de calcul de pondérations.

Les nouveaux paramètres de conduite sont de préférence appliqués automatiquement.

Dans les trois cas, les paramètres de conduite sont transmis à des dispositifs de traction et de freinage du véhicule, ces dispositifs étant aptes à appliquer les nouveaux paramètres de conduite.

Ainsi, un support d'affichage supplémentaire tel qu'un appareil électronique mobile n'est pas nécessaire.

En variante, des instructions de conduite comprenant les nouveaux paramètres de conduite sont transmises au conducteur.

Par exemple, les instructions de conduite sont affichées par des moyens d'affichage propres à afficher des instructions de conduite à destination du conducteur.

Ces nouveaux paramètres de conduite comprennent par exemple une vitesse cible à atteindre dans un délai prédéterminé. Le délai est par exemple compris entre 5 secondes et 60 secondes, typiquement égal à 30 secondes.

Par exemple, dans le troisième cas, la vitesse cible est calculée comme suit : si

$$W1 * S2 + W2 * S1 \neq 0,$$

$$TS = \frac{(S2 * S1)}{(W1 * S2 + W2 * S1)}$$

où TS est le profil de vitesse cible dans le délai prédéterminé,

W1 est la première pondération,

W2 est la deuxième pondération,

S1 est le profil de vitesse à la position instantanée pour le profil encadrant inférieur, et

S2 est le profil de vitesse à la position instantanée pour le profil encadrant supérieur.

Dans les cas où

$$W1 * S2 + W2 * S1 = 0,$$

la vitesse cible est égale à 0. Par exemple, au point de départ, la vitesse cible est 0. Le système d'affichage est désactivé en deçà d'une vitesse paramétrable.

Le profil de vitesse cible est par exemple calculé par un quatrième dispositif de calcul à bord.

Le profil de vitesse cible est ainsi un profil de vitesse intermédiaire pondéré entre les vitesses des deux profils encadrants.

Ces nouveaux paramètres de conduite comprennent par exemple une position cible de manette de conduite.

Par exemple, la position cible de la manette de conduite est calculée comme suit :

$$TH = W1 * H1 + W2 * H2$$

où TH est la position cible de la manette de conduite,

W1 est la première pondération,

W2 est la deuxième pondération,

H1 est la position de la manette pour le profil encadrant inférieur, et

H2 est la position de la manette pour le profil encadrant supérieur.

La position cible de la manette de conduite est par exemple calculée par un cinquième dispositif de calcul à bord.

De préférence, la vitesse cible est un paramètre plus important que la position cible de la manette de conduite.

Sur l'exemple représenté, la durée restante souhaitée à la position instantanée x est comprise entre le profil « normal », qui est le profil encadrant supérieur et le profil « rapide », qui est le profil encadrant inférieur. Le profil intermédiaire pondéré résultant se situe entre les deux profils et est déterminé grâce au calcul de pondérations appliquées au deux profils encadrants.

De préférence, les étapes du procédé selon l'invention sont répétées lors du trajet. Par exemple, les étapes du procédé sont mises en oeuvre à des positions du véhicule prédéterminées, ou à des instants prédéterminés. Par exemple, les étapes du procédé sont mises en oeuvre tous les 500 mètres. Cependant, des distances inférieures ou supérieures à 500 mètres peuvent être envisagées sans que cela ne modifie le procédé.

Ainsi, le procédé selon l'invention permet de diminuer les besoins en temps de calcul et en capacité de calcul embarquée dans le véhicule. En effet, l'interpolation des profils de vitesses nécessite peu de capacité de calcul, tout en assurant une durée de parcours la plus élevé possible en respectant la table horaire, ce qui garantit que l'énergie consommée sera la plus faible possible.

Par exemple, en cas de retard du véhicule à une position donnée, il suffit d'effectuer une interpolation entre deux profils encadrants afin de définir le nouveau profil de mission.

La présente invention a également pour objet un dispositif d'aide à la conduite.

Le dispositif d'aide à la conduite comprend par exemple le dispositif de guidage par satellite, le dispositif de comparaison propre à comparer la durée restante souhaitée à la position instantanée avec la durée restante de chacun des profils de mission, et à identifier le ou les profils les plus proches, le premier dispositif de calcul à bord, le deuxième dispositif de calcul à bord, le troisième dispositif de calcul à bord, le quatrième dispositif de calcul à bord et le cinquième dispositif de calcul à bord définis précédemment.

De préférence, le dispositif d'aide à la conduite comprend un processeur intégrant le dispositif de comparaison propre à comparer la durée restante souhaitée à la position instantanée avec la durée restante de chacun des profils de mission, et à identifier le ou les profils les plus proches, le premier dispositif de calcul à bord, le deuxième dispositif de calcul à bord, le troisième dispositif de calcul à bord, le quatrième dispositif de calcul à bord et le cinquième dispositif de calcul à bord définis précédemment.

Le dispositif d'aide à la conduite selon l'invention est de préférence un dispositif embarqué.

Ainsi, un support d'affichage supplémentaire tel qu'un appareil électronique mobile n'est pas nécessaire.

Le processeur est par exemple intégré au TCMS.

De préférence, le dispositif d'aide à la conduite comprend en outre une mémoire propre à enregistrer les profils de mission et les paramètres de conduite.

La mémoire est par exemple intégrée au TCMS.

De préférence encore, le dispositif d'aide à la conduite comprend des moyens de communication entre chaque dispositif de calcul et les dispositifs de traction et de freinage de façon à modifier automatiquement les paramètres de conduite en fonction des résultats obtenus.

En variante, le dispositif d'aide à la conduite comprend des moyens d'affichage propres à afficher des instructions de conduite à destination du conducteur. De préférence, les moyens d'affichage sont intégrés au TCMS.

## Revendications

1. Procédé d'aide à la conduite d'un véhicule de transport public comprenant, pour un trajet donné entre un point de départ et une destination, et pour une arrivée à la destination à un instant souhaité donné :

   - une étape préalable de détermination et d'enregistrement d'une pluralité de profils de mission du véhicule, chaque profil étant formé par une courbe de durée restante pour atteindre la destination en fonction d'une position du véhicule sur le trajet selon des paramètres de conduite donnés associés à ce profil,
   - à au moins un premier instant au cours du trajet, une étape de détermination d'une position instantanée du véhicule à ce premier instant et d'une durée restante souhaitée pour atteindre la destination, la durée restante souhaitée étant obtenue par différence entre l'instant souhaité donné pour arriver à la destination et le premier instant,

- une étape d'identification, parmi les profils de mission, du ou des profils de mission dont les courbes sont les plus proches de la durée restante souhaitée à la position instantanée du véhicule,

**caractérisé en ce que** :

a) dans le cas où la durée restante souhaitée est inférieure à la durée restante la plus basse à la position instantanée parmi tous les profils, une étape de détermination de nouveaux paramètres de conduite pour suivre un nouveau profil de mission, le nouveau profil de mission étant le profil dont la durée restante est la plus basse à la position instantanée parmi tous les profils de mission déterminés,

b) dans le cas où la durée restante souhaitée est supérieure à la durée restante la plus haute à la position instantanée parmi tous les profils mais en-deçà d'une valeur prédéterminée, une étape de détermination de nouveaux paramètres de conduite pour suivre un nouveau profil de mission, le nouveau profil de mission étant le profil dont la durée restante est la plus haute à la position instantanée parmi tous les profils de mission déterminés,

c) dans le cas où la durée restante souhaitée se trouve, à la position instantanée, entre les durées restantes de deux profils comportant un profil encadrant supérieur dont la durée restante à la position instantanée est immédiatement supérieure à la durée restante souhaitée et un profil encadrant inférieur dont la durée restante à la position instantanée est immédiatement inférieure à la durée restante souhaitée,

et **en ce que** le procédé d'aide à la conduite comporte :

- une étape c1) de calcul de pondérations à partir de la durée restante souhaitée à la position instantanée et de la durée restante à ladite position instantanée pour chaque profil de mission encadrant, les pondérations comprenant une première pondération et une deuxième pondération et étant calculées comme suit :

$$W1 = \frac{(RT2 - RT)}{(RT2 - RT1)}$$

et

$$W2 = \frac{(RT - RT1)}{(RT2 - RT1)},$$

où W1 est la première pondération, destinée à être appliquée au profil inférieur,
W2 est la deuxième pondération, destinée à être appliquée au profil supérieur,
RT est la durée restante souhaitée à la position instantanée,
RT1 est la durée restante à la position instantanée pour le profil encadrant inférieur, et
RT2 est la durée restante à la position instantanée pour le profil encadrant supérieur.

- et une étape c2) de détermination de nouveaux paramètres de conduite pour suivre un nouveau profil de mission, le nouveau profil de mission étant un profil intermédiaire pondéré entre les profils de mission encadrants en fonction des résultats obtenus à l'étape de calcul de pondérations,

les nouveaux paramètres de conduite étant transmis à des dispositifs de traction et de freinage du véhicule, ces dispositifs étant aptes à appliquer ces nouveaux paramètres de conduite, ou servant pour afficher des instructions de conduite qui sont transmises au conducteur.

2. Procédé d'aide à la conduite selon la revendication 1, dans lequel les paramètres de conduite comprennent au moins un paramètre choisi parmi une vitesse instantanée, une position d'une manette de conduite et un effort de traction du véhicule.

3. Procédé d'aide à la conduite selon la revendication 1 ou 2, dans lequel l'étape de détermination de nouveaux paramètres de conduite comprend :

- une étape de détermination d'une vitesse cible à atteindre dans un délai prédéterminé pour suivre le nouveau profil de mission,
- une étape de détermination d'une vitesse instantanée du véhicule, et
- une étape d'indication d'instructions de conduite à destination d'un conducteur du véhicule de transport public, lesdites instructions de conduite comportant des instructions de modification de la vitesse instantanée en vue de l'approcher de la vitesse cible.

**4.** Procédé d'aide à la conduite selon la revendication 1 ou 2, dans lequel l'étape de détermination de nouveaux paramètres de conduite comprend :

- une étape de détermination d'une vitesse cible à atteindre dans un délai prédéterminé pour suivre le nouveau profil de mission,
- une étape de détermination d'une vitesse instantanée du véhicule, et
- une étape de modification automatique de la vitesse instantanée en vue de l'approcher de la vitesse cible.

**5.** Procédé d'aide à la conduite selon la revendication 3 ou 4, dans lequel à l'étape de détermination de nouveaux paramètres de conduite c2), la vitesse cible est calculée comme suit :
si

$$W1 * S2 + W2 * S1 \neq 0 ,$$

$$TS = ((S2 * S1))/((W1 * S2 + W2 * S1))$$

où TS est le profil de vitesse cible à atteindre dans un délai prédéterminé,
W1 est la première pondération,
W2 est la deuxième pondération,
S1 est le profil de vitesse à la position instantanée pour le profil encadrant inférieur, et
S2 est le profil de vitesse à la position instantanée pour le profil encadrant supérieur,
et dans les cas où

$$W1 * S2 + W2 * S1 = 0 ,$$

la vitesse cible est égale à 0.

**6.** Procédé d'aide à la conduite selon l'une quelconque des revendications précédentes, dans lequel le véhicule comprend un dispositif de guidage par satellite pour déterminer la position instantanée du véhicule et la durée restante souhaitée.

**7.** Procédé d'aide à la conduite selon l'une quelconque des revendications précédentes, dans lequel lorsque le véhicule effectue au moins un trajet entre un premier point de départ et une première destination, puis un trajet entre cette première destination devenant un deuxième point de départ, et une deuxième destination, ledit véhicule effectue deux missions distinctes.

**8.** Procédé d'aide à la conduite selon l'une quelconque des revendications 1 à 7, dans lequel les points de départ et de destination de chaque mission sont des points d'arrêt ou de passage sur le trajet.

**9.** Dispositif d'aide à la conduite d'un véhicule de transport public, **caractérisé en ce qu'**il comprend des moyens de mise en oeuvre d'un procédé d'aide à la conduite selon l'une quelconque des revendications précédentes.

**10.** Véhicule de transport public, **caractérisé en ce qu'**il comprend un dispositif d'aide à la conduite selon la revendication 9.

**Patentansprüche**

1.  Fahrassistenzverfahren eines Fahrzeugs des öffentlichen Verkehrs, umfassend für eine gegebene Strecke zwischen einem Startpunkt und einem Ziel und für eine Ankunft an dem Ziel zu einem gegebenen gewünschten Zeitpunkt:

    - einen vorherigen Schritt eines Bestimmens und Speicherns einer Vielzahl von Missionsprofilen des Fahrzeugs, wobei jedes Profil durch eine Kurve der verbleibenden Zeit bis zum Erreichen des Ziels abhängig von einer Position des Fahrzeugs auf der Strecke gemäß gegebenen Fahrparametern, die mit diesem Profil assoziiert sind, gebildet wird,
    - zu mindestens einem ersten Zeitpunkt im Verlauf der Strecke, einen Schritt eines Bestimmens einer momentanen Position des Fahrzeugs zu diesem ersten Zeitpunkt und einer gewünschten Restdauer bis zum Erreichen des Ziels, wobei die gewünschte Restdauer durch die Differenz zwischen dem gegebenen gewünschten Zeitpunkt zum Erreichen des Ziels und dem ersten Zeitpunkt erlangt wird,
    - einen Schritt eines Identifizierens des oder der Missionsprofile unter den Missionsprofilen, deren Kurven der gewünschten Restdauer an der momentanen Position des Fahrzeugs am nächsten kommen, **dadurch gekennzeichnet, dass**:

        a) in dem Fall, dass die gewünschte Restdauer geringer ist als die niedrigste Restdauer an der momentanen Position unter allen Profilen, ein Schritt eines Bestimmens neuer Fahrparameter, um einem neuen Missionsprofil zu folgen, das neue Missionsprofil das Profil mit der niedrigsten Restdauer an der momentanen Position unter allen bestimmten Missionsprofilen ist,
        b) in dem Fall, dass die gewünschte Restdauer größer ist als die größte Restdauer an der momentanen Position unter allen Profilen aber unterhalb eines vorgegebenen Werts, ein Schritt eines Bestimmens neuer Fahrparameter, um einem neuen Missionsprofil zu folgen, das neue Missionsprofil das Profil mit der größten Restdauer an der momentanen Position unter allen bestimmten Missionsprofilen ist,
        c) in dem Fall, dass die gewünschte Restdauer an der momentanen Position zwischen den Restdauern von zwei Profilen liegt, umfassend ein oberes Rahmenprofil, dessen Restdauer an der momentanen Position unmittelbar größer ist als die Restdauer an der momentanen Position, und ein unteres Rahmenprofil, dessen Restdauer an der momentanen Position unmittelbar größer ist als die Restdauer an der momentanen Position, die gewünschte Restdauer und ein unteres Rahmenprofil, dessen Restdauer an der momentanen Position unmittelbar kürzer ist als die gewünschte Restdauer, und dass das Fahrassistenzverfahren Folgendes umfasst:

            - einen Schritt c1) eines Berechnens von Gewichtungen anhand der gewünschten Restdauer an der momentanen Position und der Restdauer an der momentanen Position für jedes Rahmenmissionsprofil, die Gewichtungen umfassend eine erste Gewichtung und eine zweite Gewichtung, und die wie folgt berechnet werden:

$$W1 = \frac{(RT2 - RT)}{(RT2 - RT1)}$$

und

$$W2 = \frac{(RT - RT1)}{(RT2 - RT1)} ,$$

            wobei W1 die erste Gewichtung ist, die auf das untere Profil angewendet werden soll,
            W2 die zweite Gewichtung ist, die auf das obere Profil angewendet werden soll,
            RT die gewünschte Restdauer an der momentanen Position ist,
            RT1 die Restdauer an der momentanen Position für das untere Rahmenprofil ist, und
            RT2 die Restdauer an der momentanen Position für das obere Rahmenprofil ist.

            - und einen Schritt c2) eines Bestimmens neuer Fahrparameter, um einem neuen Missionsprofil zu folgen, wobei das neue Missionsprofil ein gewichtetes Zwischenprofil zwischen den Rahmenmissionsprofilen abhängig von den Resultaten ist, die in dem Schritt eines Berechnens der Gewichtungen erlangt werden,

wobei die neuen Fahrparameter an Traktions- und Bremsvorrichtungen des Fahrzeugs übertragen werden, wobei diese Vorrichtungen geeignet sind, um diese neuen Fahrparameter anzuwenden, oder dazu dienen, um Fahranweisungen anzuzeigen, die an den Fahrer übertragen werden.

2. Fahrassistenzverfahren nach Anspruch 1, wobei die Fahrparameter mindestens einen Parameter umfassen, der ausgewählt ist aus einer momentanen Geschwindigkeit, einer Position eines Fahrhebels und einer Zugkraft des Fahrzeugs.

3. Fahrassistenzverfahren nach Anspruch 1 oder 2, wobei der Schritt eines Bestimmens neuer Fahrparameter Folgendes umfasst:

   - einen Schritt eines Bestimmens einer Zielgeschwindigkeit, die innerhalb einer vorbestimmten Zeit erreicht werden muss, um dem neuen Missionsprofil zu folgen,
   - einen Schritt eines Bestimmens einer momentanen Geschwindigkeit des Fahrzeugs und
   - einen Schritt eines Anzeigens von Fahranweisungen für einen Fahrer Fahrzeugs des öffentlichen Verkehrs, wobei die Fahranweisungen Anweisungen zum Ändern der momentanen Geschwindigkeit umfassen, um sie der Zielgeschwindigkeit anzunähern.

4. Fahrassistenzverfahren nach Anspruch 1 oder 2, wobei der Schritt eines Bestimmens neuer Fahrparameter Folgendes umfasst:

   - einen Schritt eines Bestimmens einer Zielgeschwindigkeit, die innerhalb einer vorbestimmten Zeit erreicht werden muss, um dem neuen Missionsprofil zu folgen,
   - einen Schritt eines Bestimmens einer momentanen Geschwindigkeit des Fahrzeugs und
   - einen Schritt eines automatischen Änderns der momentanen Geschwindigkeit, um sie der Zielgeschwindigkeit anzunähern.

5. Fahrassistenzverfahren nach Anspruch 3 oder 4, wobei im Schritt eines Bestimmens neuer Fahrparameter c2) die Zielgeschwindigkeit wie folgt berechnet wird:
   wenn

$$W1 * S2 + W2 * S1 \neq 0,$$

$$TS = ((S2 * S1))/((W1 * S2 + W2 * S1)),$$

   wobei TS das Zielgeschwindigkeitsprofil ist, das innerhalb einer vorbestimmten Zeit erreicht werden soll,
   W1 die erste Gewichtung ist,
   W2 die zweite Gewichtung ist,
   S1 das Geschwindigkeitsprofil an der momentanen Position für das untere Rahmenprofil ist, und
   S2 das Geschwindigkeitsprofil an der momentanen Position für das obere Rahmenprofil ist,
   und in Fällen, in denen

$$W1 * S2 + W2 * S1 = 0,$$

   die Zielgeschwindigkeit gleich 0 ist.

6. Fahrassistenzverfahren nach einem der vorherigen Ansprüche, wobei das Fahrzeug eine Satellitenführungsvorrichtung zum Bestimmen der momentanen Position des Fahrzeugs und der gewünschten Restdauer umfasst.

7. Fahrassistenzverfahren nach einem der vorherigen Ansprüche, wobei, wenn das Fahrzeug mindestens eine Strecke zwischen einem ersten Startpunkt und einem ersten Ziel und dann eine Fahrt zwischen diesem ersten Ziel, der zu einem zweiten Startpunkt wird, und einem zweiten Ziel zurücklegt, das Fahrzeug zwei verschiedene Missionen erfüllt.

8. Fahrassistenzverfahren nach einem der Ansprüche 1 bis 7, wobei der Start- und der Zielpunkt jeder Mission Halte- oder Durchgangspunkte auf der Strecke sind.

9. Fahrassistenzverfahren eines Fahrzeugs des öffentlichen Verkehrs, **dadurch gekennzeichnet, dass** es Einrichtungen zum Durchführen eines Fahrassistenzverfahrens nach einem der vorherigen Ansprüche umfasst.

10. Fahrzeug des öffentlichen Verkehrs, **dadurch gekennzeichnet, dass** es eine Fahrassistenzvorrichtung nach Anspruch 9 umfasst.

**Claims**

1. Method for assisting in driving a public transport vehicle, comprising, for a given journey between a starting point and a destination, and for an arrival at the destination at a given desired time:

   - a preliminary step of determining and recording a plurality of mission profiles of the vehicle, each profile being formed by a curve of time remaining to reach the destination as a function of a position of the vehicle on the route according to driving data parameters associated with this profile,
   - at at least a first instant during the journey, a step of determining an instantaneous position of the vehicle at this first instant and a desired time remaining to reach the destination, the desired time remaining being obtained by the difference between the desired time given to arrive at the destination and the first time,
   - a step of identifying, among the mission profiles, the mission profile(s) whose curves are closest to the desired time remaining at the instantaneous position of the vehicle,

   **characterized in that**:

   a) in the case where the desired time remaining is less than the lowest time remaining at the instantaneous position among all the profiles, a step of determining new driving parameters to follow a new mission profile, the new mission profile being the profile whose time remaining is the lowest at the instantaneous position among all the determined mission profiles,
   b) in the case where the desired time remaining is greater than the highest time remaining at the instantaneous position among all the profiles but below a predetermined value, a step of determining new driving parameters to follow a new mission profile, the new mission profile being the profile with the highest time remaining at the instantaneous position among all the determined mission profiles,
   c) in the case where the desired time remaining is, at the instantaneous position, between the time remaining of two profiles comprising an upper framing profile whose time remaining at the instantaneous position is immediately greater than the desired time remaining and a framing profile less than the time remaining at the instantaneous position is immediately less than the desired time remaining,

   and **in that** the method for assisting in driving comprises:

   - a step c1) of calculating weights from the desired time remaining at the instantaneous position and the time remaining at said instantaneous position for each framing mission profile, the weightings comprising a first weighting and a second weighting and being calculated as follows:

$$W1 = \frac{(RT2 - RT)}{(RT2 - RT1)}$$

   and

$$W2 = \frac{(RT - RT1)}{(RT2 - RT1)},$$

   where W1 is the first weighting, intended to be applied to the lower profile,
   W2 is the second weighting, intended to be applied to the upper profile,
   RT is the desired time remaining at the instantaneous position,
   RT1 is the time remaining at the instantaneous position for the lower framing profile, and
   RT2 is the time remaining at the instantaneous position for the upper framing profile,

- and a step c2) of determining new driving parameters to follow a new mission profile, the new mission profile being an intermediate weighted profile between the surrounding mission profiles as a function of the results obtained in the weighting calculation step,

the new driving parameters being transmitted to traction and braking devices of the vehicle, these devices being able to apply these new driving parameters, or being used for displaying driving instructions for the driver.

2. Method for assisting in driving according to claim 1, in which the driving parameters comprise at least one parameter chosen from an instantaneous speed, a position of a driving lever and a tractive effort of the vehicle.

3. Method for assisting in driving according to claim 1 or 2, wherein the step of determining new driving parameters comprises:

- a step of determining a target speed to be reached within a predetermined time frame to follow the new mission profile,
- a step of determining an instantaneous speed of the vehicle, and
- a step of indicating driving instructions to a driver of the public transport vehicle, said driving instructions comprising instructions for modifying the instantaneous speed in order to approach the target speed.

4. Method for assisting in driving according to claim 1 or 2, wherein the step of determining new driving parameters comprises:

- a step of determining a target speed to be reached within a predetermined time frame to follow the new mission profile,
- a step of determining an instantaneous speed of the vehicle, and
- a step of automatic modification of the instantaneous speed in order to approach the target speed.

5. Method for assisting in driving according to claim 3 or 4, wherein in the step of determining new driving parameters c2), the target speed is calculated as follows:
if

$$W1 * S2 + W2 * S1 \neq 0,$$

$$TS = ((S2 * S1))/((W1 * S2 + W2 * S1))$$

where TS is the target speed profile to be reached within a predetermined time frame,
W1 is the first weighting,
W2 is the second weighting,
S1 is the speed profile at the instantaneous position for the lower framing profile, and
S2 is the speed profile at the instantaneous position for the upper framing profile, and in cases where

$$W1 * S2 + W2 * S1 = 0,$$

the target speed is 0.

6. Method for assisting in driving according to any preceding claim, wherein the vehicle comprises a satellite guidance device for determining the instantaneous position of the vehicle and the desired time remaining.

7. Method for assisting in driving according to any one of the preceding claims, wherein when the vehicle performs at least one trip between a first starting point and a first destination, then a journey between this first destination becoming a second departure point, and a second destination, said vehicle performs two distinct missions.

8. Method for assisting in driving according to any one of claims 1 to 7, wherein the starting point and the destination of each mission are stops or passage points on the route.

9. Device for assisting the driving of a public transport vehicle, **characterized in that** it comprises means for implementing a method for assisting driving according to any one of the preceding claims.

10. Public transport vehicle, **characterized in that** it comprises a device for assisting the driving according to claim 9.

**FIG.1**

## RÉFÉRENCES CITÉES DANS LA DESCRIPTION

**Documents brevets cités dans la description**

- WO 2012119197 A
- WO 2008152287 A
- DE 102011013010
- DE 102010024800